# EUROPEAN PATENT APPLICATION

(11) **EP 2 241 909 A2**
(43) Date of publication of application: **20.10.2010**
(21) Application number: 10157871.4
(22) Date of filing: 26.03.2010
(51) Int. Cl.: G02B 1/11

(54) **Nanostructured anti-reflection coatings and associated methods and devices**

(30) Priority: 09.04.2009 US 421101
(71) Applicant: General Electric Company, Schenectady, NY 12345 (US)
(72) Inventor: Xi, Yangang Andrew, Schenectady, NY 12308 (US); Tsakalakos, Loucas, Niskayuna, NY 12309 (US); Korevaar, Bastiaan Arie, Schenectady, NY 12305 (US); Tolliver, Todd Ryan, Clifton Park, NY 12065 (US); Zhong, Dalong, Niskayuna, NY 12309 (US)
(74) Representative: Szary, Anne Catherine

(57) **Abstract**

An anti-reflection coating is described. The coating is disposed on a surface of a substrate. The anti-reflection coating includes an array of substantially transparent nanostructures having a primary axis substantially perpendicular to the surface of the substrate. The array of substantially transparent nanostructures is characterized by a graded refractive index. In some embodiments, each of the nanostructures has a substantially uniform cross-sectional area along the primary axis. Related methods and devices are also described.

## Description

### BACKGROUND

This invention generally relates to anti-reflection coatings. More particularly, the invention relates to omni-directional anti-reflection coatings for optoelectronic devices. The invention also relates to methods for producing such anti-reflection coatings.

The reduction of light reflection from a surface of an optical device or component is of great interest. These reflection-free surfaces may be desirable for many applications, such as storefront windows, display devices, photovoltaic devices, picture frames, etc. To this end, anti-reflection coatings of suitable refractive indices are commonly used. However, the availability of such materials having a low refractive index (RI), e.g., between 1.0 (air) and 1.49 (glass), is very limited.

It is seen from current research that nanostructured optical thin films with controllable porosity often exhibit a very low refractive index as compared to dense materials. For example, SiO₂ nanostructured porous films often have an effective refractive index of about 1.08, which is much lower than 1.46 RI value forSiO₂ thin films. These single layer anti-reflection coatings reduce reflectivity only in a limited spectral range, and for normal incidence.

However, graded index coatings often can provide omni-directional and broadband antireflection characteristics. These properties of anti-reflection coatings are of particular interest for optoelectronic applications. Achieving near-perfect transmission and absorption by the device, and zero reflection over a broad solar spectrum, ranging from ultraviolet to infrared, can increase the performance (e.g. energy efficiency) of such devices.

The effective refractive index of a graded index anti-reflection coating typically varies gradually, from top to bottom. Various graded index profiles such as linear, cubic and quintic, can be deposited. Each graded index profile exhibits low reflectivity over a broad spectral range, for a wide range of incident angles, with a quintic index profile often having the best performance.

Graded index coatings often have multiple layers of materials, to achieve refractive index variations from the substrate to an ambient medium. For example, a graded effective refractive index coating having TiO₂ and SiO₂ nanostructured layers, deposited by oblique angle deposition, can have a refractive index varying from 2.7 to 1.05, as described in "Optical Thin-Film Materials With Low Refractive Index For Broadband Elimination Of Fresnel Reflection", by J.-Q. XI et al, Nature Photonics vol 1, page 176, 2007. Also, the combination of nanostructured layers can be used to achieve any refractive index value between 2.7 and 1.05.

Different techniques have been reported for producing graded index coatings. The techniques include interference patterning by two coherent light beams, sol-gel processes, and physical vapor deposition. Most of these methods have one or more drawbacks related to processing and cost. Also, the choice of materials for practical control of the index profile can sometimes be very limited.

Thus, it would be desirable to produce improved omni-directional antireflection coatings, in order to meet various performance requirements for optoelectronic devices. It would also be very desirable to develop an improved process to produce and deposit such anti-reflection coatings.

### BRIEF DESCRIPTION OF THE INVENTION

According to some embodiments of the present invention, an anti-reflection coating is provided, wherein the anti-reflection coating is disposed on a surface of a substrate. The anti-reflection coating includes an array of substantially transparent nanostructures having a primary axis substantially perpendicular to the surface of the substrate. Furthermore, the array of substantially transparent nanostructures is characterized by a graded refractive index.

According to some other embodiments of the present invention, an anti-reflection coating is provided, wherein the anti-reflection coating is disposed on a surface of a substrate. The anti-reflection coating includes an array of substantially transparent nanostructures having a primary axis substantially perpendicular to the surface of the substrate, wherein each of the nanostructures has a substantially uniform cross section area along the primary axis.

Briefly, some embodiments of the present invention provide an optoelectronic device including a substrate and an anti-reflection coating disposed on a surface of the substrate, wherein the surface is positioned for exposure to electromagnetic radiation. Furthermore, the anti-reflection coating includes an array of substantially transparent nanostructures having a primary axis substantially perpendicular to the surface of the substrate, and the array of substantially transparent nanostructures is characterized by a graded refractive index.

Some embodiments of the present invention provide an optoelectronic device including a substrate and an anti-reflection coating disposed on a surface of the substrate, wherein the surface is positioned for exposure to electromagnetic radiation. Furthermore, the anti-reflection coating includes an array of substantially transparent nanostructures having a primary axis substantially perpendicular to the surface of the substrate, wherein each of the nanostructures has a substantially uniform cross section area along the primary axis.

According to some embodiments of the present invention, a method of forming an anti-reflection coating on an optoelectronic device is provided. The method comprises the step of forming an array of substantially transparent nanostructures on a surface of a substrate. The nanostructures have a primary axis substantially perpendicular to the surface and the array of substantially transparent nanostructures is characterized by a graded refractive index. In some embodiments, each of the nanostructures has a substantially uniform cross-section area along the primary axis. The nanostructures are formed by a technique selected from the group consisting of wet etching, dry etching, and deposition.

### DRAWINGS

These and other features, aspects, and advantages of the present invention will become better understood when the following detailed description is read with reference to the accompanying drawings, wherein:
FIG. 1 is a schematic of one embodiment of the present invention;
FIG. 2 shows a schematic of another embodiment of the present invention;
FIG. 3A is a schematic of an embodiment of the present invention;
FIG. 3B is a schematic of another embodiment of the present invention; and
FIG. 4 is a schematic of one embodiment of the present invention.

### DETAILED DESCRIPTION

As discussed in detail below, some of the embodiments of the present invention provide an antireflection coating for optical surfaces. These embodiments advantageously reduce the reflectivity of the antireflection coating. The embodiments of the present invention also describe an improved optoelectronic device having the antireflection coating disposed on a surface of the device. The embodiments are also capable of producing the antireflection coating for the optoelectronic device.

Approximating language, as used herein throughout the specification and claims, may be applied to modify any quantitative representation that could permissibly vary without resulting in a change in the basic function to which it is related. Accordingly, a value modified by a term or terms, such as "about", is not limited to the precise value specified. In some instances, the approximating language may correspond to the precision of an instrument for measuring the value.

A "nanostructure" as used herein, is a structure having at least one region or characteristic dimension with a feature size of less than about 500 nanometers (nm), less than about 200 nm, less than about 100 nm, less than about 50 nm, or even less than about 20 nm. Examples of such structures include nanowires, nanorods, nanotubes, branched nanocrystals, nanotetrapods, tripods, bipods, nanocrystals, nanodots, nanoparticles and the like. Nanostructures can be substantially homogeneous in material properties. However, in other embodiments, the nanostructures can be heterogeneous. Nanostructures can be substantially crystalline, monocrystalline, polycrystalline, amorphous or a combination thereof. Other features of the nanostructure can have a size in the micrometer or even millimeter range. In one aspect, each of the dimensions of the nanostructure has a dimension of less than about 500 nm, for example, less than about 200 nm, less than about 100 nm, less than about 50 nm or even less than about 20 nm. For specific end use, the nanostructure often has a dimension in a range from about 20 nm to about 200 nm.

The optical properties of nanostructures can be determined by their size, and chemical or surface compositions. Various properties of the nanostructures, such as absorption properties, emission properties and refractive index properties, can be utilized to create an antireflection coating that can be tailored and adjusted for various applications.

The term "substantially transparent", according to the present invention, means that the nanostructures allow the passage of a substantial portion of solar radiation. The substantial portion may be at least about 70% of the solar radiation.

"Substantially perpendicular", according to the present invention, means that the primary axis is inclined at an angle in a range of from about 90 degrees to about 75 degrees, relative to the surface of the substrate.

According to an embodiment of the present invention, the antireflection coating is disposed on a surface of a substrate. The antireflection coating includes an array of substantially transparent nanostructures having a primary axis. The primary axis is substantially perpendicular to the surface of the substrate. The array of substantially transparent nanostructures is characterized by a graded refractive index. The graded refractive index may be defined as a continuous or nearly continuous variation in the refractive index of the nanostructures in a direction (along the primary axis). The nanostructures may be arranged in a random fashion or in a periodic fashion on the surface of the substrate.

In general, the refractive index of a medium is defined as the ratio of the velocity of light in a vacuum to that of the medium. The refractive index of the nanostructures, according to the present invention, may be characterized as an "effective refractive index". The effective refractive index, as defined herein, is used to determine the phase lag and attenuation of the coherent wave as electromagnetic radiation propagates through the array of substantially transparent nanostructures. The optical nanostructures are a type of composite material having low refractive indices. These composite materials typically consist of various fractions of air and base material. The parameters such as size, local volume/area fraction, air/material fraction and material refractive index, determine the effective refractive index of nanostructures. For example, a discussion of the effective refractive index of a suspension of sub-wavelength scattering particles is described, in "Measurement of the effective refractive index of a turbid colloidal suspension using light refraction" by A. Reyes-Coronado et al, New Journal of Physics 7 (2005) 89, which is incorporated herein by reference.

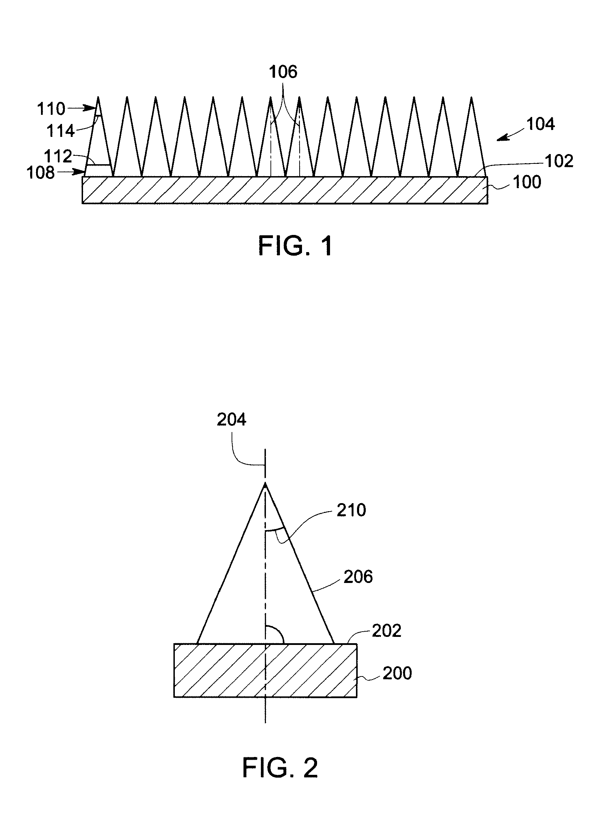

According to an embodiment of the present invention, the anti reflection coating includes an array of nanostructures having varying cross-sectional areas along the primary axis, as shown in Fig. 1. Fig. 1 is a cross-sectional view of the anti-reflection coating disposed on a substrate. The substrate 100 includes a surface 102. The anti-reflection coating comprises an array of substantially transparent nanostructures 104. The nanostructures have a primary axis 106, substantially perpendicular to the surface of the substrate. Each of the nanostructures has a lower region 108 and an upper region 110 along the primary axis. The lower region 108 is in contact with the surface 102 of the substrate 100. Usually, the upper region 110 is substantially opposite the lower region 108, on same side of the substrate. The lower region 108 has a cross-sectional area 112 and the upper region has a cross-sectional area 114.

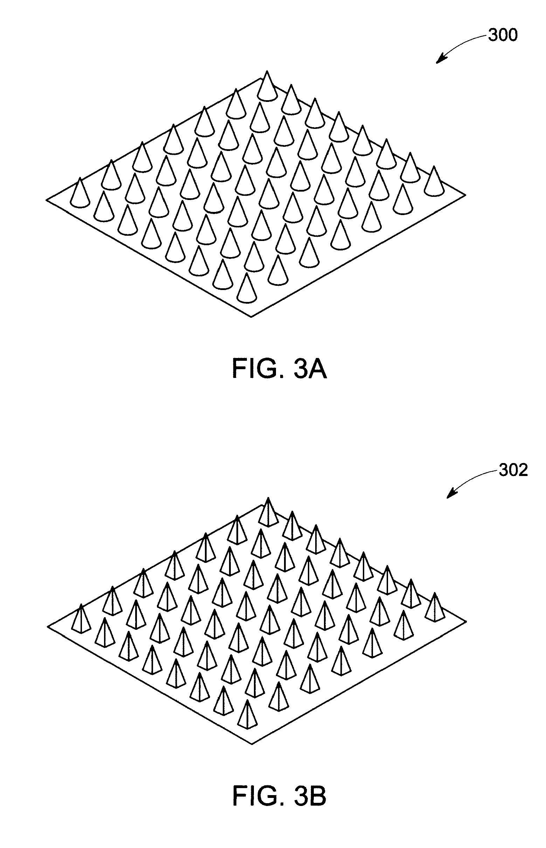

The nanostructures 104 of the present invention can be in variety of shapes. In one embodiment, the nanostructures are conical in shape. Fig. 3A schematically illustrates an array of conical nanostructures 300. According to another embodiment, the nanostructures are pyramidal in shape. The array of pyramidal nanostructures 302 is illustrated schematically in Fig 3B.

The term "pyramidal" mentioned herewith generally refers to the geometrical definition of the term. A pyramid is a polyhedron formed by connecting a polygonal base and a point, called the apex. Each base edge and apex form a triangle. It can be thought of as a conical solid with a polygonal base. The polygonal base may take the shape of a triangle, a square, a pentagon, a hexagon, and the like. The pyramid may also have a star polygon base. The "conical shape" defined herein refers to a figure bounded by a planar base and a surface (lateral surface) formed by the locus of all straight line segments joining the apex to the perimeter of the base. The axis of a cone is a straight line passing through the apex, about which the lateral surface has a rotational symmetery. The base may be circular or oval and the apex may lie in any location. The cone may be a right circular cone or an oblique circular cone, for example.

As described above, the pyramidal or conical nanostructure usually has a continuously varying cross-sectional area along the primary axis. The volume fraction of the nanostructure changes with the change in the cross-sectional area. As the volume fraction changes, the ratio of air to material changes along the primary axis. As discussed above, this produces a variation in the effective refractive index along the primary axis of the nanostructure, and results in a graded effective refractive index nanostructure.

In an exemplary embodiment, the cross-sectional area of the nanostructure is greater at the lower region, and decreases toward the upper region, as illustrated in Fig. 1. The volume fraction of the nanostructure reduces gradually with the gradual decrease of the cross-sectional area, and increases the air-to-material ratio from the lower region to the upper region. Thus, the nanostructure usually has a higher refractive index at the lower region that decreases gradually towards the upper region.

The nanostructures may be relatively narrow or wide, depending on an internal angle of the pyramidal or conical shape. The internal angle as used herein may be defined with reference to Fig 2. Fig 2 shows a cross-sectional view of a single pyramidal or conical nanostructure on the surface 202 of the substrate 200. The nanostructure has the primary axis 204 and 206 is a straight line joining the perimeter of the base to the apex. The internal angle 210 is the angle between the axis 204 and the straight line 206.

The pyramidal or conical nanostructure may have a steep or gentle (shallow) graded effective refractive index. The gradient of the effective refractive index depends on the internal angle of the nanostructures. The internal angle of the pyramidal or conical nanostructures may be greater than about 1 degree. In one embodiment, the internal angle may be in a range of from about 1 degree to about 20 degrees, from about 20 degrees to about 40 degrees, from about 40 degrees to about 60 degrees, or from about 60 degrees to about 70 degrees. In a particular embodiment, the internal angle may be in a range of from about 20 degrees to about 40 degrees.

According to an embodiment of the present invention, the anti reflection coating includes an array of nanostructures having a graded composition along the primary axis. The graded composition of the nanostructure provides the graded refractive index. In other words, the refractive index changes due to the change in composition of the material of the nanostructure. The "graded composition" as defined herein refers to a gradual variation in the composition in one direction, although the gradation may not be always constant.

The nanostructures may contain a graded composition along the primary axis, in order to provide the graded refractive index. In one embodiment, the graded composition may comprise a combination of at least two electrically conductive materials. The concentrations of the constituent materials change gradually to achieve the gradation. In another embodiment, the graded composition may be achieved by depositing multiple materials.

In certain embodiments, the nanostructures of the graded composition may have a uniform cross-sectional area along the primary axis. The cross-sectional area may be of variety of shapes. Examples of various shapes may include, but are not limited to, circular, triangular, rectangular, square, or hexagonal. Irregular shapes are also possible. In some embodiments, the nanostructures of the graded composition may have non-uniform cross-sectional areas at the lower region and at the upper region. In one embodiment, the nanostructures may be pyramidal in shape. In other embodiments, the nanostructures may be conical in shape. In this case, the gradient refractive index of the nanostructure is the combined effect of the gradation in refractive index due to the pyramidal or conical structure, and due to the gradation in the composition.

As described above, the nanostructures have the graded refractive index. In other words, the refractive index of the nanostructures may gradually vary from the lower region to the upper region. As the lower region is in contact with the substrate, the lower region usually has a value, which substantially matches the refractive index of the substrate. The type of variation of the refractive index towards the upper region may depend on the presence of a medium (as discussed below) near the upper region. In some embodiments, the refractive index may increase or decrease in a direction from the lower region to the upper region, and may substantially match the refractive index of the medium in the upper region.

In some of the above embodiments, the refractive index of the nanostructures may decrease in a direction from the lower region to the upper region, as noted previously. The value of the refractive index at the upper region may be about 1, which matches the refractive index of the medium. This value may also depend on the material used to form the nanostructure.

In one embodiment, the medium may be air (having a refractive index equal to 1). Therefore, the refractive index of the nanostructures may decrease from the lower region to the upper region in such a way as to attain a lower value at the upper region. In a particular embodiment, the lower value of the refractive index in the upper region may be about 1.

According to some embodiments of the present invention, the array of substantially transparent nanostructures need not be characterized by a graded refractive index. However, each of the nanostructures must have a substantially uniform cross-section along the primary axis. In other alternative embodiments, the nanostructures are characterized by both a graded refractive index and the substantially uniform cross-section.

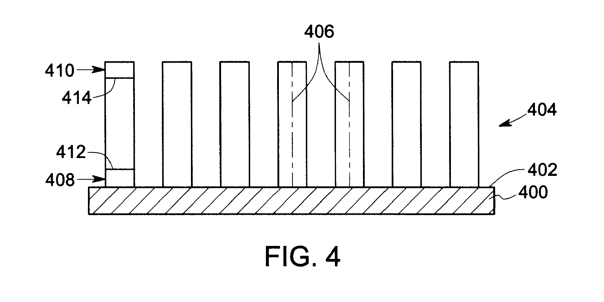

In one embodiment, the nanostructures may have a substantially uniform cross-sectional area along the primary axis, as shown in Fig. 4. Fig. 4 is a cross-sectional view of the anti-reflection coating disposed on a substrate, according to some embodiments. The substrate 400 has a surface 402. The anti-reflection coating includes an array of substantially transparent nanostructures 404. The nanostructures have a primary axis 406, perpendicular to the surface of the substrate. Each of the nanostructures has a lower region 408 and an upper region 410 along the primary axis. The lower region 408 is in contact with the surface 402 of the substrate 400. The upper region 410 is substantially opposite the lower region 408, on same side of the substrate. In these embodiments, the nanostructures 404 of the present invention usually have substantially equal cross-sectional areas (412 and 414) at the lower region and at the upper region respectively. The nanostructures may be arranged in a random fashion or in a periodic fashion on the surface of the substrate.

The cross-sectional area may be of variety of shapes. Examples of various shapes may include, but are not limited to, circular, triangular, rectangular, square, or hexagonal. Irregular shapes are also possible. In one embodiment, each of the nanostructures is a nanowire. In another embodiment, each of the nanostructures is a nanorod.

The nanorods may have a height less than about 100 nm, in the above embodiment. In some embodiments, the nanorods may vary in height in a range of from about 50 nm to about 100 nm. Furthermore, the nanorods may be arranged periodically on the surface of the substrate with a period smaller than the wavelength of electromagnetic radiation. Such nanorods of substantially uniform cross-sectional area are characterized by a sub-wavelength scattering phenomenon, and provide very low reflectance. In other words, the nanostructures of the substantially uniform cross-sectional areas may behave as sub-wavelength scattering objects, which provide large forward scattering, and subsequent transmission of light to the underlying substrate. This effect has been shown in absorbing silicon nanowire arrays. (However, in that case, strong absorption due to light trapping occurred due to the use of absorbing nanowires, as described, for example, in "Strong Broadband Optical Absorption in Si Nanowire Films", by L. Tsakalakos et al, Journal of Nanophotonics, 17 July 2007, vol. 1, which is incorporated herein by reference). When light interacts with such a sub-wavelength cylindrical object, the light "Mie scatters", following the Rayleigh criterion, such that the scattering cross section is proportional to the fourth power of the size of the particle (for example in the case of a spherical particle). This phenomenon is described, for example, in "Peculiarities of light scattering by nanoparticles and nanowires near plasmon resonance frequencies in weakly dissipating materials" by B. S. Luk'yanchuk, J. Opt. A: Pure Applied Optics 9, Pages S294-S300, 2007, which is incorporated herein by reference.

In some embodiments, the nanorods may have a graded composition. In this case, the reflectance of the anti-reflection coating is the combined effect of the sub wavelength scattering and graded refractive index of the nanorods due to compositional grading.

According to an embodiment of the present invention, the array of substantially transparent nanostructures includes an electrically conductive material. Some examples of suitable, transparent, electrically conductive materials may include an oxide, sulfide, phosphide, telluride or combinations thereof. These transparent electrically conductive materials may be doped or undoped. In an exemplary embodiment, the electrically conductive oxide may include titanium dioxide, silicon oxide, zinc oxide, tin oxide, aluminum doped zinc oxide, fluorine-doped tin oxide, cadmium stannate (tin oxide), and zinc stannate (tin oxide). In another embodiment, the electrically conductive oxide includes indium containing oxides. Suitable indium containing oxides may be selected from the group consisting of indium tin oxide (ITO), Ga-In-Sn-O, Zn-In-Sn-O, Ga-In-O, Zn-In-O, and combinations thereof. Suitable sulfides may include cadmium sulfide, indium sulfide and the like. Suitable phosphides may include indium phosphide, gallium phosphide, and the like. In one embodiment, the electrically conductive material may have bandgap greater than about 2.0 eV. In some embodiments, the nanostructures may contain two or more transparent, electrically conductive materials with gradually varying concentrations

In some embodiments, the array of substantially transparent nanostructures may include a non-conductive non-crystalline material such as glass. Non-limiting examples of glasses may include soda-lime glass, alumino-silicate glass, boro-silicate glass, silica, and iron-rich glass. In some embodiments, the array of substantially transparent nanostructures may include a non-conductive crystalline material.

The size (height and cross sectional dimensions) and shape of the nanostructure may depend on the process/method used to grow such nanostructures and on the temperature at which the nanostructures are grown. In one embodiment, each of the nanostructures of the anti-reflection coating may have a height in a range of from about 100 nanometers to about 10 micrometers. In some preferred embodiments, each of the nanostructures may have height in a range of from about 200 nanometers to about 2 micrometers. In one embodiment, each of the nanostructures may have a surface contact area in a range of from about 100 nm² to about 10⁴ nm². The surface contact area is the cross-sectional area 112 at the lower region of the nanostructure. In some embodiments, the nanostructures may vary in height and surface contact area within the array.

According to an embodiment of the present invention, the substrate may have a substantially planar surface. A "substantially planar surface", as defined herein, usually refers to a substantially flat surface. The surface can be smooth, although it may include a relatively minor degree (e.g., about 20% of the total surface area) of texture (e.g., roughness), indentations, and various irregularities. In some embodiments, the substrate can exhibit flexibility. Moreover, in some embodiments, the surface of the substrate may be curved - usually with a relatively large radius of curvature.

Substrate selection may include substrates of any suitable material, including, but not limited to, metal, semiconductor, doped semiconductor, amorphous dielectrics, crystalline dielectrics, and combinations thereof. In some embodiments, the substrate includes a transparent and electrically conductive material. Suitable transparent, electrically conductive materials may include an oxide, sulfide, phosphide, telluride or combinations thereof. These transparent, electrically conductive materials may be doped or undoped. In an exemplary embodiment, the electrically conductive oxide may comprise titanium dioxide, silicon oxide, zinc oxide, tin oxide, aluminum doped zinc oxide, fluorine-doped tin oxide, cadmium stannate (tin oxide), zinc stannate (tin oxide), or various combinations thereof. In another embodiment, the electrically conductive oxide includes at least one indium-containing oxide. Examples of suitable indium-containing oxides are indium tin oxide (ITO), Ga-In-Sn-O, Zn-In-Sn-O, Ga-In-O, Zn-In-O, and combinations thereof. Suitable sulfides may include cadmium sulfide, indium sulfide and the like. Suitable phosphides may include indium phosphide and the like. In one embodiment, the electrically conductive material may have a bandgap greater than about 2.0 eV.

In some embodiments, the substrate may comprise a non-conductive non-crystalline material such as glass. As mentioned above in reference to nanostructure materials, examples of the glass include soda-lime glass, alumino-silicate glass, boro-silicate glass, silica, and, but not limited to, iron-rich glass. In some embodiments, the substrate may comprise a non-conductive crystalline material.

In one embodiment, the present invention comprises an optoelectronic device. The device includes a substrate and an anti-reflection coating. The anti-reflection coating is disposed on a surface of the substrate that is positioned for exposure to electromagnetic radiation. The anti-reflection coating includes an array of substantially transparent nanostructures having a primary axis. The primary axis is substantially perpendicular to the surface of the substrate. In one embodiment, the array of substantially transparent nanostructures is characterized by a graded refractive index. In other embodiments, each of the nanostructures has a substantially uniform cross section along the primary axis.

As used herein, the "optoelectronic device", refers to devices that either produce light or use light in their operation. Typically, p-n or p-i-n semiconducting junctions are an integral part of optoelectronic devices.

The optoelectronic devices may be of several types. In some embodiments, the optoelectronic device may be a photodiode, a light emitting diode, a photovoltaic device, or a semiconductor laser. These optoelectronic devices can be used in variety of applications. Examples of applications include a display, a photo detector, general lighting, a camera, and fiber-optic communications.

In a preferred embodiment, the optoelectronic device is a photovoltaic cell or a photovoltaic module. The photovoltaic module may have an array of the photovoltaic cells. The photovoltaic module may have glass cover protecting the cells onto which the antireflection coating is disposed. The antireflection coating can be disposed on the photovoltaic cells or the photovoltaic module on the surface of the substrate, such that the antireflection coating is exposed to the solar radiation. The antireflection coating can be disposed on more than one location of the photovoltaic module, for example, the coating can be disposed on a top side of the module glass cover, a backside of the module glass cover, and/or on a surface of the solar cells in the module, such that the antireflection coating is exposed to the solar radiation.

In some embodiments, the photovoltaic module or the photovoltaic cell may include, but is not limited to, an amorphous silicon cell, a crystalline silicon cell, a hybrid/heterojunction amorphous and crystalline silicon cell, CdTe thin film cell, micromorph tandem silicon thin film cell, Cu(In,Ga)Se₂ (CIGS) thin film cell, GaAs cell, multiple-junction III-V-based solar cells, dye-sensitized solar cells, and solid-state organic/polymer solar cells. In some embodiments these solar cells may contain a transparent conductor onto which the anti-reflecting coating is disposed.

In some embodiments, the present invention is directed to a method of forming an anti reflection coating on an optoelectronic device. The method includes the steps of forming an array of substantially transparent nanostructures on a surface of a substrate. The nanostructures have a primary axis substantially perpendicular to the surface. In some embodiments, the array of nanostructures is characterized by a graded refractive index. In some embodiments, each of the nanostructures has a substantially uniform cross section along the primary axis. The nanostructures are formed by a technique selected from the group consisting of wet etching, dry etching, and deposition.

Examples of suitable dry etching techniques include, but are not limited to, reactive ion etching (RIE), inductively coupled plasma (ICP) etching, and combinations thereof. The dry etching technique may be combined with a method of forming nanoscale etch masks. As a non-limiting example, the nanoscale etch masks may initially be formed by nanosphere lithography, dip-coating, spin-coating, sputtering, in situ nanoparticle deposition, and combinations thereof. Subsequently, a dry etching step may be performed. An example of a suitable wet etching techniques is metal assisted wet etching.

In an exemplary embodiment, the deposition technique is selected from the group consisting of chemical vapor deposition, wet chemical solution deposition, physical vapor deposition, and glancing angle deposition technique. Glancing angle deposition is known in the art, and described, for example, in "Designing Nanostructures by Glancing Angle Deposition" by Y. P. Zhao et al, Proceedings of SIPE Vol. 5219 Nanotubes and Nanowires; SPIE, Bellingham, WA, 2003. In brief, the glancing angle deposition (GLAD) technique is usually carried out by combining oblique angle deposition with substrate positional control. GLAD involves a physical vapor deposition process, where the deposition flux is incident onto a substrate with a large angle with respect to the surface normal, while the substrate is rotating. GLAD produces columnar structures through the effect of shadowing during film growth, while the substrate rotation controls the shape of the columns. GLAD provides three parameters - the incident angle, the growth rate and the substrate rotational speed, to control the morphology of the nanostructures. During GLAD, the deposition rate not only has a vertical component (with respect to the substrate), but also has a lateral component. The lateral growth rate contributes to the shadowing effect, which gives rise to two major advantages for GLAD: the self-alignment effect and the lateral sculpturing effect.

### EXAMPLES

The following examples are presented to further illustrate certain embodiments of the present invention. These examples should not be read to limit the invention in any way.

The example illustrates an embodiment where a deposition technique was used to produce the anti reflection coating. This involved growing Si nanostructures on a quartz substrate, using the vapor-liquid-solid growth mechanism (VLS) with chemical vapor deposition (CVD). The techniques to grow nanostructures are described, for example, in "Vapor-liquid-solid mechanism of single crystal growth," by R. S. Wagner et al, Appl. Phys. Lett. 4(5), 89-90 (1964) and in "Conformal Dielectric Films on Silicon Nanowire Arrays by Plasma Enhanced Chemical Vapor Deposition", J. Fronheiser, et al, Journal of Nanoparticle Research, (2008). Growth of nanostructures in this manner at high temperatures (greater than about 700 °C), using silane and hydrogen gas precursors, led to pyramidal or conical shapes having a larger cross-sectional area at the base than that of the top due to enhanced sidewall deposition. The nanostructures have lengths of about 2-5 microns and diameters of about 50-200 nm. The nanostructures were subsequently oxidized in a tube furnace containing oxygen at 600-800 °C.

In a preferred example, ZnO nanostructures were formed by solution deposition at 70-90 °C on a glass substrate coated with a thin ZnO seed layer. Well-formed, high density arrays of nanostructures were fashioned with lengths up to 3 micrometers.

In one embodiment, a metal assisted galvanic wet etching technique was used to produce the array of nanostructures. A silicon film was disposed over the substrate of the optoelectronic device. The device (or the substrate) was then placed in a chemical bath with anisotropic etchant and a metal precursor (1M AgNO₃ in HF). The temperature of the bath was kept between 50-80 °C. This process led to the precipitation of nanoscale Ag dendrite particles on the surface. The Si nanostructures were then oxidized to form transparent silicon oxide nanostructures.

In a preferred example, nanosphere lithography was combined with reactive ion etching (RIE) to form nanostructured anti-reflective layers on a glass substrate. Nanosphere lithography is well known and described, for example, in "Nanosphere lithography: A materials general fabrication process for periodic particle array surfaces", J.C. Hulteen et al, J. Vac. Sci. Technol. A, 13 1553 (1995). A fused silica substrate was coated with a 1 micrometer thick amorphous silica layer by high temperature low-pressure chemical vapor deposition. After a standard cleaning procedure, nanosphere lithography was performed by dipping the substrates in a solution containing polystyrene nanospheres such that the nanospheres assembled into a hexagonal close-packed monolayer lattice on the glass surface when removed from the solution. A 100 nm Ni film was then electron-beam evaporated onto the samples, such that Ni nanoscale dots/triangles were formed on the glass substrates in the location below the interstices of the nanospheres. The nanospheres were removed from the surface by soaking in acetone to allow for lift-off. Nanostructures arrays were formed by placing the samples in an RIE reactor using a standard oxide etch recipe targeting a 2 micron etch depth. Higher power in the RIE reactor led to more etching of Ni with respect to the glass substrate, which led to conical nanostructures. By controlling the relative etch rates of the glass substrate to that of the Ni nanoscale dots/triangles, narrow or wide conical nanostructures were created. Finally, the Ni was etched, using a standard etchant for this metal with a 100% overetch.

A similar process can be performed directly on a soda-lime glass or a substrate containing a transparent conductor. The nanoscale etch masks have also been formed by direct deposition and annealing of a thin metal Ni film. The measured total reflectance and transmission properties of the silica nanostructrures were found to be up to 50% better than the control substrates without nanostructures over the whole spectral range from 300 to 1,100 nm.

In one embodiment, nanowires with a graded composition along the primary axis were produced. The array of graded composition nanowires was achieved by glancing angle deposition. Multiple compositions of Si₁₋ₓTiₓO₂ for different values of x were deposited. The initial feed composition contained only TiO₂. As deposition continued, the amount of TiO₂ was decreased while equal amounts of SiO₂ were added, so that at the end of deposition, i.e., at the top of the nanostructures, the composition was purely SiO₂. Similar grading may also be achieved by chemical vapor deposition or by liquid phase synthesis, followed by nanostructure formation with wet or dry etching techniques.

Thus the embodiments described in this invention provide several advantages over other anti-reflection coatings and processes, and provide a unique solution of producing omni directional broadband anti-reflection coatings with low reflectance.

While only certain features of the invention have been illustrated and described herein, many modifications and changes will occur to those skilled in the art. It is, therefore, to be understood that the appended claims are intended to cover all such modifications and changes as fall within the true scope of the invention

For completeness, various aspects of the invention are now set out in the following numbered clauses:
1. An anti-reflection coating disposed on a surface of a substrate, the anti-reflection coating comprising:
   an array of substantially transparent nanostructures having a primary axis substantially perpendicular to the surface of the substrate, wherein the array of substantially transparent nanostructures is characterized by a graded refractive index.
2. The anti-reflection coating of clause 1, wherein the nanostructures are pyramidal or conical in shape.
3. The anti-reflection coating of clause 2, wherein each of the pyramidal or conical nanostructures has an internal angle ranging from about 1 degree to about 70 degrees
4. The anti-reflection coating of clause 1, wherein the nanostructures have a graded composition along the primary axis.
5. The anti-reflection coating of clause 1, wherein each of the nanostructures has a lower region in contact with the substrate, and an upper region substantially opposite the lower region, and the refractive index of the nanostructures varies from a value that substantially matches the refractive index of the substrate to a higher value or a lower value , in a direction from the lower region to the upper region.
6. The anti-reflection coating of clause 1, wherein each of the nanostructures has a height in a range of from about 100 nanometers to about 10 micrometers.
7. The anti-reflection coating of clause 6, wherein each of the nanostructures has a height in a range of from about 200 nanometers to about 2 micrometers.
8. The anti-reflection coating of clause 1, wherein each of the nanostructures has a lower region in contact with the substrate, and an upper region substantially opposite the lower region, and the average surface-contact area of the lower region of each of the nanostructures is in a range of from about 100 nm² to about 10⁵ nm².
9. The anti-reflection coating of clause 1, wherein the nanostructures comprise an electrically conductive material.
10. The anti-reflection coating of clause 9, wherein the electrically conductive material comprises an oxide, sulfide, phosphide, telluride or combinations thereof.
11. The anti-reflection coating of clause 1, wherein the nanostructures comprise a non-conductive crystalline material.
12. The anti-reflection coating of clause 1, wherein the nanostructures comprise a non-conductive non-crystalline material.
13. The anti-reflection coating of clause 1, wherein the substrate comprises a transparent electrically conductive material.
14. The anti-reflection coating of clause 13, wherein the transparent electrically conductive material comprise a transparent electrically conductive oxide, sulfide, phosphide or telluride.
15. The anti-reflection coating of clause 1, wherein the substrate comprises a non-conductive crystalline transparent material.
16. The anti-reflection coating of clause 1, wherein the substrate comprises a non-conductive non-crystalline transparent material.
17. An anti reflection coating disposed on a surface of a substrate, the anti-reflection coating comprising:
   an array of substantially transparent nanostructures having a primary axis substantially perpendicular to the substrate, wherein each of the nanostructures has a substantially uniform cross section along the primary axis.
18. The anti-reflection coating of clause 17, wherein the substantially uniform cross section is in a shape selected from the group consisting of circular, triangular, rectangular, square, or hexagonal.
19. The anti-reflection coating of clause 17, wherein the nanostructures have a graded composition along the primary axis.
20. An optoelectronic device, comprising:
   a substrate, and
   an anti-reflection coating disposed on a surface of the substrate, the surface being positioned for exposure to electromagnetic radiation,
   wherein the anti-reflection coating comprises an array of substantially transparent nanostructures having a primary axis substantially perpendicular to the surface of the substrate, and the array of substantially transparent nanostructures is characterized by a graded refractive index.
21. The optoelectronic device of clause 20, is in the form of a photovoltaic cell or a photovoltaic module.
22. The optoelectronic device of clause 20, is in the form of a photodetector, a camera, a light emitting diode device, or a display..
23. An optoelectronic device, comprising:
   a substrate, and
   an anti-reflection coating disposed on a surface of the substrate, the surface being positioned for exposure to electromagnetic radiation,
   wherein the anti-reflection coating comprises an array of substantially transparent nanostructures having a primary axis substantially perpendicular to the surface of the substrate, wherein each of the nanostructures has a substantially uniform cross-section along the primary axis.
24. A method of forming an anti-reflection coating on an optoelectronic device, comprising the step of forming an array of substantially transparent nanostructures on a surface of a substrate, wherein the nanostructures have a primary axis substantially perpendicular to the surface; and the array of substantially transparent nanostructures is characterized by a graded refractive index; and
   the nanostructures are formed by a technique selected from the group consisting of wet etching, dry etching, and deposition.
25. The method of clause 24, wherein the deposition technique is selected from the group consisting of chemical vapor deposition, wet chemical solution deposition, physical vapor deposition, and a glancing angle deposition technique.
26. The method of clause 24, wherein the dry etching technique is combined with a method of forming nanostructured etch masks, using a process selected from the group of nanosphere deposition, dip coating, spin-coating, evaporation, sputtering, annealing, and combinations thereof.
27. A method of forming an anti-reflection coating on an optoelectronic device, comprising the step of forming an array of substantially transparent nanostructures on a surface of a substrate, wherein the nanostructures have a primary axis substantially perpendicular to the surface; and each of the nanostructures has a substantially uniform cross-section along the primary axis; and
   the nanostructures are formed by a technique selected from the group consisting of wet etching, dry etching, and deposition.

## Claims

1. An anti-reflection coating disposed on a surface of a substrate, the anti-reflection coating comprising:
an array of substantially transparent nanostructures having a primary axis substantially perpendicular to the surface of the substrate, wherein the array of substantially transparent nanostructures is **characterized by** a graded refractive index.

2. The anti-reflection coating of claim 1, wherein the nanostructures are pyramidal or conical in shape.

3. The anti-reflection coating of claim 2, wherein each of the pyramidal or conical nanostructures has an internal angle ranging from about 1 degree to about 70 degrees

4. The anti-reflection coating of any preceding claim, wherein the nanostructures have a graded composition along the primary axis.

5. The anti-reflection coating of claim 1, wherein each of the nanostructures has a lower region in contact with the substrate, and an upper region substantially opposite the lower region, and the refractive index of the nanostructures varies from a value that substantially matches the refractive index of the substrate to a higher value or a lower value , in a direction from the lower region to the upper region.

6. The anti-reflection coating of any preceding claim, wherein the nanostructures comprise an electrically conductive material.

7. The anti-reflection coating of any preceding claim, wherein the nanostructures comprise a non-conductive crystalline material or a non-conductive non-crystalline material.

8. The anti-reflection coating of any preceding claim, wherein the substrate comprises a transparent electrically conductive material.

9. An anti reflection coating disposed on a surface of a substrate, the anti-reflection coating comprising:
an array of substantially transparent nanostructures having a primary axis substantially perpendicular to the substrate, wherein each of the nanostructures has a substantially uniform cross section along the primary axis.

10. The anti-reflection coating of claim 9, wherein the substantially uniform cross section is in a shape selected from the group consisting of circular, triangular, rectangular, square, or hexagonal.

11. The anti-reflection coating of claim 9 or claim 10, wherein the nanostructures have a graded composition along the primary axis.

12. An optoelectronic device, comprising:
a substrate, and
an anti-reflection coating disposed on a surface of the substrate, the surface being positioned for exposure to electromagnetic radiation,
wherein the anti-reflection coating comprises an array of substantially transparent nanostructures having a primary axis substantially perpendicular to the surface of the substrate, and the array of substantially transparent nanostructures is **characterized by** a graded refractive index.

13. An optoelectronic device, comprising:
a substrate, and
an anti-reflection coating disposed on a surface of the substrate, the surface being positioned for exposure to electromagnetic radiation,
wherein the anti-reflection coating comprises an array of substantially transparent nanostructures having a primary axis substantially perpendicular to the surface of the substrate, wherein each of the nanostructures has a substantially uniform cross-section along the primary axis.

14. A method of forming an anti-reflection coating on an optoelectronic device, comprising the step of forming an array of substantially transparent nanostructures on a surface of a substrate, wherein the nanostructures have a primary axis substantially perpendicular to the surface; and the array of substantially transparent nanostructures is **characterized by** a graded refractive index; and
the nanostructures are formed by a technique selected from the group consisting of wet etching, dry etching, and deposition.

15. A method of forming an anti-reflection coating on an optoelectronic device, comprising the step of forming an array of substantially transparent nanostructures on a surface of a substrate, wherein the nanostructures have a primary axis substantially perpendicular to the surface; and each of the nanostructures has a substantially uniform cross-section along the primary axis; and
the nanostructures are formed by a technique selected from the group consisting of wet etching, dry etching, and deposition.
